# EUROPÄISCHE PATENTSCHRIFT

(11) **EP 2 335 808 B1**
(45) Veröffentlichungstag und Bekanntmachung des Hinweises auf die Patenterteilung: **03.06.2015**
(21) Anmeldenummer: 09180263.7
(22) Anmeldetag: 21.12.2009
(51) Int. Cl.: F01N 3/023, B01D 53/94, B01J 23/10, B01J 23/22, B01J 23/63, F01N 3/08, B01J 37/02, B01J 23/00, B01J 23/34, B01J 23/656, F01N 13/00, B01J 35/00, B01J 23/89, B01J 35/04

(54) **NO2 Sperrkatalysator**
NO2 Slip catalyst
Catalyseur piège à NO2

(43) Veröffentlichungstag der Anmeldung: 22.06.2011
(73) Patentinhaber: Kahlert, Bernhard, 5323 Rietheim (CH)
(72) Erfinder: Kahlert, Bernhard, 5323 Rietheim (CH)
(74) Vertreter: Wirnsberger, Gernot

(56) Entgegenhaltungen:
- EP-A1- 0 315 896
- EP-A1- 1 837 076
- EP-A1- 2 130 582
- EP-A1- 2 153 896
- WO-A1-2009/118188
- DE-C1- 3 347 919
- US-A- 4 591 580
- US-A1- 2007 137 187

## Beschreibung

Die Erfindung betrifft einen Sperrkatalysator zur Reduktion eines NO₂-Gehaltes in einem von einem Abgasstrom durchströmten Abgastrakt einer Verbrennungskraftmaschine, insbesondere eines Abgastraktes eines Dieselmotors, der einen Oxidationskatalysator zur Bildung von NO₂ und einen stromabwärts angeordneten Partikelfilter zur Bindung von Rußpartikeln und gleichzeitiger und/oder anschließender Umsetzung derselben mit am Oxidationskatalysator gebildetem NO₂ aufweist, umfassend ein Substrat, das mit einer Beschichtung versehen ist, welche einen Anteil von NO₂ im durchströmenden Abgasstrom durch Reduktion des NO₂ verringert, wobei die Beschichtung zumindest zwei Elemente aus der Gruppe der Seltenerdmetalle aufweist, die in Form eines Salzes oder Oxides oder elementar und jeweils in einer Konzentration von mehr als 300,0 bis 50000,0 g/m³ in der Beschichtung vorliegen, wobei die Beschichtung Barium und/oder Mangan enthält, dadurch gekennzeichnet, dass die Beschichtung Palladium und/oder Rhodium aufweist und im Wesentlichen frei von Platin ist.

Des Weiteren betrifft die Erfindung einen Abgastrakt einer Verbrennungskraftmaschine, umfassend eine von einem Abgasstrom durchströmte Abgasreinigungsvorrichtung, die einen Oxidationskatalysator und optional einen Partikelfilter aufweist, wobei stromabwärts ein Sperrkatalysator zur Reduktion eines NO₂-Gehaltes im vom Abgasstrom durchströmten Abgastrakt angeordnet ist.

Gemäß dem Stand der Technik werden in Abgastrakten von Dieselmotoren Partikelfilter vorgesehen, die im Dieselabgas enthaltene Rußpartikel ausfiltern. Die Partikelfilter führen jedoch mit zunehmender Beladung durch Rußpartikel zu einem höheren Abgasgegendruck. Um dies zu vermeiden, ist es erforderlich, die auf einem Partikelfilter befindlichen bzw. von diesem ausgefilterten Rußpartikel kontinuierlich oder in bestimmten zeitlichen Abständen diskontinuierlich zu verbrennen. Dadurch kann ein erhöhter Abgasgegendruck und/oder ein Abfall der Motorleistung vermieden werden.

Ein diesbezügliches Konzept besteht darin, einem Partikelfilter einen Oxidationskatalysator vorzuschalten, der im Abgas enthaltenes Stickstoffmonoxid (NO) zu Stickstoffdioxid (NO₂) oxidiert. Der Oxidationskatalysator ist hierfür in der Regel mit einem Edelmetall wie Platin oder Palladium beschichtet. Im stromabwärts nachgeschalteten Partikelfilter hingegen werden die Rußpartikel aus dem Abgas ausgefiltert. Das im Abgas vorhandene NO₂ und das am Oxidationskatalysator gebildete NO₂ (Sekundär-NO₂) setzt sich am Partikelfilter mit den dort festgehaltenen Rußpärtikeln unter Verbrennung derselben um. Derartige Systeme arbeiten ab Temperaturen von 250 °C selbsttätig, d. h., dass der Partikelfilter ständig regeneriert wird, ohne dass zusätzliche Maßnahmen erforderlich sind. Man spricht in diesem Zusammenhang von passiver Regeneration. Eine entsprechende Einrichtung wird als Continuous Regenerating Trap (CRT) bezeichnet. Möglich ist es in diesem Zusammenhang auch, bloß eine Komponente vorzusehen, die als Oxidationskatalysator wirkt, gleichzeitig aber auch Rußpartikel aus dem Abgasstrom filtert, die sogleich am Oxidationskatalysator mit NO₂ umgesetzt werden.

Bei CRT-Systemen besteht das Problem, dass in allen Betriebszuständen, d. h. auch bei niedrigen Betriebstemperaturen im Abgastrakt, am bzw. im Partikelfilter ein NO₂-Überschuss erwünscht ist, damit eine passive Regeneration des Partikelfilters erfolgen kann bzw. die Rußpartikel zu 100 % umgesetzt werden. Dies kann dazu führen, dass ein NO₂-Gehalt am Ende des CRT-Systems im Vergleich mit dem unmittelbar aus dem Motor austretenden Abgas erhöht ist. Ein erhöhter NO₂-Gehalt im ausgestoßenen Abgas ist jedoch nicht gewünscht. Vielmehr wird aktuell von gesetzgeberischer Seite gefordert, dass eine Erhöhung der NO₂-Konzentration im Abgastrakt nicht mehr oder nur innerhalb bestimmter Grenzen zulässig ist.

Möglich ist es gemäß dem Stand der Technik, bei CRT-Systemen einen NO₂-Gehalt im Abgasstrom zu verringern, indem sogenannte Selective Catalytic Reduction (SCR) vorgesehen wird. Dabei wird nach dem Partikelfilter eine Harnstoff enthaltende Lösung in den Abgastrakt eingespritzt. Die Harnstoff enthaltende Lösung setzt Ammoniak frei und reagiert an einem nachgeschalteten Katalysator mit NO₂ unter Bildung nicht giftiger Gase. Ein SCR-System bedingt allerdings einen hohen Betriebsaufwand. So ist unter anderem ein Tank für Harnstofflösung vorzusehen, was einen zusätzlichen Aufwand in der Herstellung und im Betrieb erfordert.

Das Dokument EP 2 130 582 A1 offenbart einen Katalysator zur NOₓ-Verringerung, wobei der Katalysator eine Beschichtung mit zwei Seltenerdmetallen sowie Platin und Palladium in einem bestimmten Verhältnis enthält.

Das Dokument WO 2009/118188 A1 offenbart einen NOₓ-Speicherkatalysator, der eine kristalline Ausbildung gemäß der kubischen Fluoritstruktur zur Grundlage hat und dabei zwei Seltenerdmetalle sowie eine aktive Komponente zur NOₓ-Speicherung aufweist. Für die NOₓ-Speicherung kommt eine Vielzahl von im Kristallverbund eingebauten Ionen infrage

Aufgabe der Erfindung ist es, einen Sperrkatalysator der eingangs genannten Art anzugeben, mit dem auf einfache Weise eine Reduktion eines NO₂-Gehaltes in einem Abgasstrom erreicht werden kann.

Ein weiteres Ziel der Erfindung ist es, einen Abgastrakt der eingangs genannten Art anzugeben, bei dem auf einfache Weise ein NO₂-Gehalt in einem Abgasstrom reduziert werden kann.

Die Aufgabe der Erfindung wird erfindungsgemäß durch einen Sperrkatalysator gemäß Anspruch 1 gelöst. Das weitere Ziel der Erfindung wird durch einen Abgastrakt der eingangs genannten Art mit einem entsprechenden Sperrkatalysator erreicht.

Ein mit der Erfindung erzielter Vorteil ist insbesondere darin zu sehen, dass die Beschichtung mit zumindest zwei Elementen aus der Gruppe der Seltenerdmetalle zu einer signifikanten Reduktion des NO₂-Gehaltes in einem Abgasstrom eines Dieselmotors führt. Darüber hinaus werden auch Anteile von Kohlenwasserstoffen und Kohlenmonoxid (CO) im Abgasstrom wirksam reduziert. Wenngleich der Reaktionsmechanismus noch nicht bekannt ist, wird vermutet, dass sich die Kohlenwasserstoffe mit NO₂ umsetzen, sodass dieses reduziert wird.

Erfindungsgemäß weist die Beschichtung zwei oder mehr Elemente der Seltenerdmetalle jeweils in einer Konzentration von 300,0 bis 50000,0 g/m³ auf. Interessanterweise wurde festgestellt, dass bei diesen hohen Konzentrationen von zwei oder mehr Seltenerdmetallen in der Beschichtung eine besonders wirksame Reduktion von NO₂ stattfindet. Eine minimale Summenkonzentration der zumindest zwei Seltenerdmetalle beträgt bevorzugt 800,00 g/m³ oder mehr.

Besonders bevorzugt ist es, dass die Beschichtung Elemente der Seltenerdmetalle ausgewählt aus der Gruppe bestehend aus Lanthan, Yttrium, Cer, Neodym und/oder Samarium aufweist. Beschichtungen mit diesen Elementen bewirken eine besonders effiziente Reduktion von NO₂.

Die Beschichtung weist Palladium und/oder Rhodium auf. Darüber hinaus hat es sich bewährt, dass die Beschichtung Vanadium aufweist. Eine Vanadiumkonzentration kann 100,0 bis 10000,0 g/m³ betragen. Eine Konzentration von Rhodium liegt bevorzugt in einem Bereich von 200,0 bis 2000,0 g/m³. Sofern Palladium vorgesehen ist, beträgt dessen Konzentration mit Vorteil 150,0 bis 15000,0 g/m³.

Obwohl einerseits die Edelmetalle Palladium und/oder Rhodium vorgesehen sind, ist die Beschichtung andererseits im Wesentlichen frei von Platin ist, da sich eine Anwesenheit von Platin als nachteilig in Bezug auf eine NO₂-Reduktion erweisen kann.

Gemäß der Erfindung enthält die Beschichtung des Weiteren Barium und/oder Mangan, wobei diese Elemente beispielsweise in Form eines Oxides oder Salzes vorliegen. Konzentrationen von Barium wie auch Mangan liegen bevorzugt jeweils im Bereich von 150,0 bis 1500,0 g/m³, wiederum bezogen auf die Elemente. Die Anwesenheit von Barium und/oder Mangan in der Beschichtung bewirkt eine Verringerung der Mindesttemperatur für eine NO₂-Reduktion, sodass bei Anwesenheit eines oder bevorzugt beider Elemente eine NO₂-Reduktion bereits ab einer Temperatur von 100 °C erfolgen kann, was deutlich niedriger ist als bei SCR-Systemen, die erst ab einer Temperatur von 200 °C effektiv arbeiten.

Die Beschichtung kann aus mehreren Beschichtungslagen bestehen. Bevorzugt ist vorgesehen, dass die Beschichtung eine untere Beschichtungslage aufweist, auf welcher eine die Seltenerdmetalle enthaltende obere Beschichtungslage abgeschieden ist. Die untere Beschichtungslage ist eine aus dem Stand der Technik bekannte sogenannte Washcoat-Beschichtungslage, die im Wesentlichen aus Aluminiumoxid besteht. Die obere Beschichtungslage kann, um eine möglichst große Oberfläche zu bilden und damit eine hohe katalytische Wirksamkeit zu erzielen, Partikel aus kristallinem Siliciumdioxid oder einer glasartigen Silicumdioxid-Phase umfassen, welche Partikel durchschnittlich kleiner als 100 nm sind.

Das Substrat kann grundsätzlich aus beliebigen Materialen gebildet sein, die aus der Abgasreinigungstechnik bekannt sind. Beispielsweise kann das Substrat bzw. der Träger als Metall- oder Keramikschaum, metallisches Drahtgestrick oder als keramischer Wall-Flöw-Filter ausgebildet sein. Bevorzugt ist es, dass das Substrat bzw. der Träger aus einem keramischen Material, insbesondere Cordierit, gebildet ist. Dabei kann das Substrat im Unterschied zu Wall-Flow-Filtern mit parallelen Kanälen ausgebildet sein, die sich von einer Eintrittsseite bis zu einer Austrittsseite des Substrates erstrecken. Dadurch ist sichergestellt, dass der Sperrkatalysator nicht wesentlich zur Erhöhung eines Abgasgegendruckes beiträgt. Um dennoch eine große katalytisch aktive Oberfläche zur Verfügung zu haben, weist das Substrat in einer Ebene normal zu den parallelen Kanälen weniger als 250, vorzugsweise etwa 100 bis 200, Zellen pro Quadratinch (cpsi) auf.

Das weitere Ziel der Erfindung wird wie erwähnt durch einen Abgastrakt der eingangs genannten Art erreicht, bei dem der Sperrkatalysator erfindungsgemäß ausgebildet ist. Ein mit einem erfindungsgemäßen Abgastrakt erzielter Vorteil ist darin zu sehen, dass ein NO₂-Gehalt am Ende des Abgastraktes niedriger ist als am Anfang, wenngleich der Abgastrakt ein CRT-System umfasst.

Der Sperrkatalysator weist in radialer Richtung bevorzugt seitliche Bleche auf, die gasundurchlässig sind und an welchen der Sperrkatalysator in einem Gehäuse des Abgastraktes gehalten ist. Eine derartige Ausbildung des Abgastraktes kommt insbesondere dann zum Tragen, wenn bestehende CRT-Systeme mit einem erfindungsgemäßen Sperrkatalysator nachgerüstet werden, um endseitig einen NO₂-Gehalt im Abgastrakt zu verringern. Es ist dann lediglich erforderlich, ein Gehäuse aufzutrennen und den Sperrkatalysator einzusetzen und anschließend das Gehäuse mit einer Schelle wieder zu verbinden. Es kann vorgesehen sein, dass zwischen dem Oxidationskatalysator oder dem Partikelfilter und dem Sperrkatalysator eine Düse zum Einspritzen von Kohlenwasserstoffen angeordnet ist. In diesem Fall ist es möglich, bei Bedarf eine NO₂-Reduktion durch Einspritzen von kurzkettigen Kohlenwasserstoffen, beispielsweise bei niedriger Kohlenwasserstoffkonzentration im motorseitigen Abgasstrom, zu fördern.

Weitere Merkmale, Vorteile und Wirkungen der Erfindung ergeben sich aus der nachfolgenden Darstellung von Ausführungsbeispielen. In den Zeichnungen, auf welche dabei Bezug genommen wird, zeigen:
Fig. 1 einen Abgastrakt im Querschnitt;
Fig. 2 einen nachgerüsteten Abgastrakt im Querschnitt;
Fig. 3 eine mögliche Ausbildung eines Abgastraktes im Bereich III gemäß Fig. 2;
Fig. 4 ein Diagramm betreffend die Reduktion eines NO₂-Gehaltes in einem Abgastrakt bei variierender Belastung eines Motors.

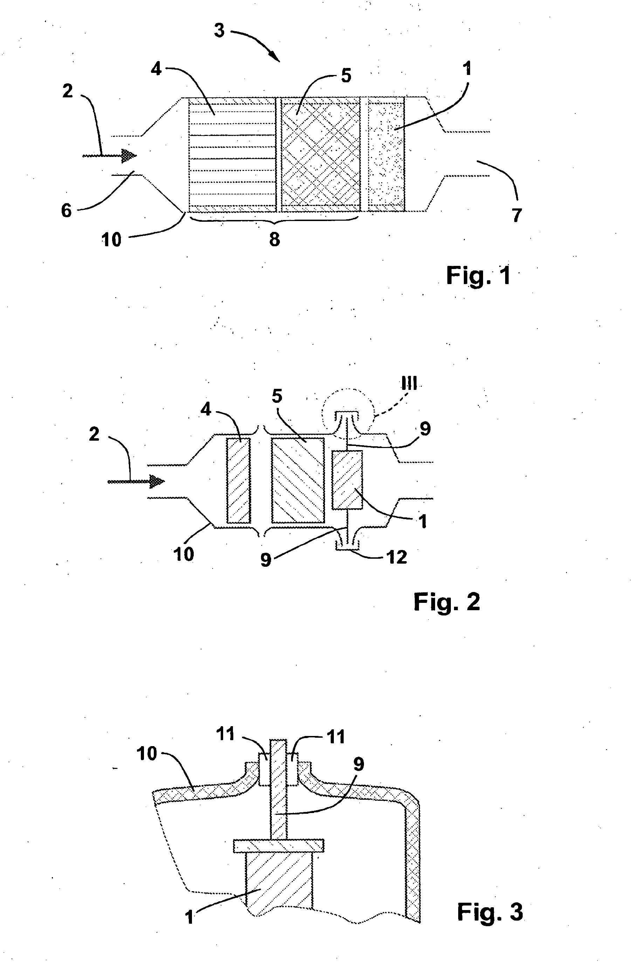

In Fig. 1 ist ein Abgastrakt 3 eines Dieselmotors im Querschnitt entlang einer Längsachse dargestellt. Der Abgastrakt 3 wird von einem Abgasstrom 2 durchströmt. Der Abgasstrom 2 tritt an einer Eintrittsseite 6 in den Abgastrakt 3 ein. Beginnend von der Eintrittsseite 6 bis hin zu einer Austrittsseite 7 ist eine äußere Form des Abgastraktes 3 durch ein Gehäuse 10 bestimmt. Das Gehäuse 10 erweitert sich von der Eintrittsseite 6 zu einem mittleren Bereich hin, ehe es sich zur Austrittsseite 7 hin wieder verjüngt. Im mittleren, im Querschnitt verbreiterten Bereich ist eine Abgasreinigungsvorrichtung 8 angeordnet. Die Abgasreinigungsvorrichtung 8 umfasst einen Oxidationskatalysator 4 und einen stromabwärts nachgeschalteten Partikelfilter 5. Die Abgasreinigungsvorrichtung 8 bzw. Oxidationskatalysator 4 und Partikelfilter 5 bilden gemeinsam ein CRT-System, wie es aus dem Stand der Technik bekannt ist. Am Oxidationskatalysator 4, der hierfür mit geeigneten Materialen beschichtet sein kann, wird im Abgasstrom 2 vorhandenes NO zu NO₂ oxidiert. Das so gebildete NO₂ setzt sich wie auch allfällig bereits vorhandenes NO₂ am Partikelfilter 5 mit dort aus dem Abgasstrom 2 ausgefilterten Rußpartikeln unter Verbrennung derselben um. Geeignete Betriebstemperaturen vorausgesetzt, arbeitet die Abgasreinigungsvorrichtung 8 ohne zusätzliche Regenerationshilfe, also passiv. Dies setzt allerdings voraus, dass in allen Betriebszuständen in Bezug auf einen Beladungsgrad mit Rußpartikeln am Partikelfilter 5 ein Überschuss von NO₂ vorhanden ist. Dies führt dazu, dass die NO₂-Konzentration im Abgasstrom 2 am Ende des Partikelfilters 5 durchwegs höher ist als im Bereich der Eintrittsseite 6. Man spricht in diesem Zusammenhang auch von NO₂-Sekundäremission. Um die NO₂-Sekundäremission bestmöglich zu verringern, ist stromabwärts nach dem Partikelfilter 5 zusätzlich ein Sperrkatalysator 1 vorgesehen. Der Sperrkatalysator 1 weist ein Substrat bzw. einen Träger auf, der gasdurchlässig ist und grundsätzlich aus beliebigen Materialien bestehen kann, die aus der Abgasreinigung von Fahrzeugen bekannt sind. Beispielsweise kann das Substrat aus einem Metallschaum, einem Keramikschaum, einem metallischen Drahtgewirk oder auch einer gewickelten Metallfolie bestehen. Auch ein Einsatz eines Substrates in Form eines Wall-Flow-Filters ist möglich. Bevorzugt ist es jedoch, dass das Substrat bzw. der Träger aus einem keramischen Material wie Cordierit besteht und eine Vielzahl von parallelen Kanälen aufweist, die sich parallel zur Längsachse des Abgastraktes 3 erstrecken.

Bezüglich der Ausbildung der Größe der Kanäle ist vorgesehen, dass das Substrat im Querschnitt weniger als 250 cpsi aufweist. Günstig ist eine Größe der Kanäle, die im Querschnitt normal zu den Kanälen in einer Porenanzahl von 100 bis 200 cpsi resultiert. Das Substrat bzw. der Träger weist eine erste Beschichtungslage auf, die als Washcoat-Beschichtungslage ausgebildet ist und im Wesentlichen aus Aluminiumoxid besteht. Eine weitere obere Beschichtungslage ist auf der Washcoat-Beschichtungslage aufgebracht. Diese obere Beschichtungslage weist neben Aluminiumoxid und/oder Siliciumoxid die in der nachfolgenden Tabelle 1 angegebenen Elemente auf.

**Tabelle 1 - Elemente der oberen Beschichtungslage**

| Element | Form | Bevorzugter Gehalt (g/m³) |
|---|---|---|
| Rhodium | elementar | 200,0 bis 2000,0 |
| Palladium | elementar | 150,0 bis 15000,0 |
| Kupfer | Oxid | 100,0 bis 10000,0 |
| Titan | Oxid | 100,0 bis 150000,0 |
| Lanthan | Oxid | 300,0 bis 20000,0 |
| Vanadium | Oxid | 100,0 bis 10000,0 |
| Cer | Oxid | 500,0 bis 50000,0 |
| Barium | Oxid | 150,0 bis 1500,0 |
| Mangan | Oxid | 150,0 bis 1500,0 |

Des Weiteren können mit Vorteil die Elemente Yttrium mit einem Gehalt von 300,0 bis 10000,0 g/m³, Neodym mit einem Gehalt von 150,0 bis 5000,0 g/m³ und/oder Samarium mit einem Gehalt von 100,0 bis 3000,0 g/m³ vorgesehen sein. Dies ist jedoch nicht zwingend.

Die untere Beschichtungslage umfasst bevorzugt Silicium mit einem Gehalt von 50,0 bis 20000,0 g/m³, Aluminium mit einem Gehalt von 50,0 bis 15000,0 g/m³ und Eisen mit einem Gehalt von 600,0 bis 60000,0 g/m³.

Beide Beschichtungslagen werden durch Eintauchen in eine entsprechende Lösung bzw. Suspension und anschließendes Calcinieren bei einer Temperatur von etwa 500 °C erstellt. Dabei erweist es sich als zweckmäßig, um eine katalytisch aktive Oberfläche zu vergrößern, dass in der Lösung bzw. Suspension für die Erstellung der oberen Beschichtungslage kristalline oder amorphe Partikel aus Siliciumdioxid vorliegen, die einen durchschnittlichen Partikeldurchmesser von weniger als 100 nm aufweisen.

Der Abgastrakt 3 kann in einem Werk vorgefertigt und beispielsweise im Abgastrakt eines Kraftfahrzeuges eingebaut werden. Möglich ist es aber auch, wie in Fig. 2 und 3 schematisch dargestellt, einen mit einem CRT-System bereits ausgestatteten oder später nachgerüsteten Abgastrakt 3 eines mit Diesel betriebenen Kraftfahrzeuges zusätzlich mit einem Sperrkatalysator 1 nachzurüsten. In diesem Fall wird das Gehäuse 10 entlang des Umfangs aufgeschnitten, wonach der Sperrkatalysator 1 eingesetzt wird. Um ein einfaches Einsetzen zu ermöglichen, ist der Sperrkatalysator 1 in radialer Richtung mit seitlichen Blechen 9 ausgestattet, die gasundurchlässig sind. Die Bleche 9 sind dünn ausgebildet und weisen lediglich eine Stärke von 1 bis 2 mm auf. Bevorzugt sind die Bleche 9 aus einem Stahl gebildet. Der Sperrkatalysator 1 mit den radialen Blechen 9 kann dann in einfacher Weise in das Gehäuse 10 eingesetzt werden, ohne dass besondere bauliche Maßnahmen bezüglich des Abgastraktes 3 erforderlich sind. Hierfür werden seitlich der Bleche 9 Dichtungen 11 vorgesehen, die zum Gehäuse 10 hin abdichten und der Sperrkatalysator 1 mit den radialen Blechen 9 eingesetzt und anschließend mit einer um das Gehäuse 10 geführten Schelle 12 fixiert.

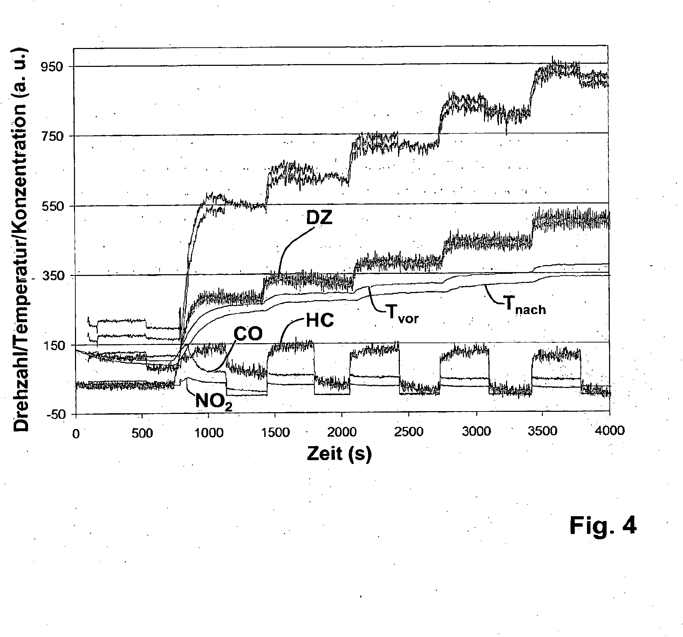

In Fig. 4 ist ein Diagramm betreffend eine NO₂-Reduktion in einem Abgastrakt 3 mit einem erfindungsgemäßen Sperrkatalysator 1 dargestellt. Für verschiedene Motorbelastungsstufen mit einer steigenden Drehzahl DZ eines Dieselmotors wurde im Abgastrakt 3 jeweils die Temperatur Tᵥₒᵣ vor dem Sperrkatalysator 1 und die Temperatur T_{nach} nach dem Sperrkatalysator 1 gemessen. Des Weiteren wurden die Anteile von Kohlenwasserstoffen HC, Kohlenmonoxid CO und Stickstoffdioxid NO₂, jeweils in ppm, gemessen. Dabei wurden Konzentrationsmessungen für jede Motorbelastungsstufe etwa eine Hälfte der Zeit vor dem Sperrkatalysator 1 und etwa eine Hälfte der Zeit nach dem Sperrkatalysator 1 durchgeführt. Wie aus Fig. 4 ersichtlich ist, sind nach dem Sperrkatalysator 1 NO₂, CO und die Kohlenwasserstoffe HC nahezu auf null reduziert.

## Patentansprüche

1. Sperrkatalysator (1) zur Reduktion eines NO₂-Gehaltes in einem von einem Abgasstrom (2) durchströmten Abgastrakt (3) einer Verbrennungskraftmaschine, insbesondere eines Abgastraktes (3) eines Dieselmotors, der einen Oxidationskatalysator (4) zur Bildung von NO₂ und einen stromabwärts angeordneten Partikelfilter (5) zur Bindung von Rußpartikeln und gleichzeitiger und/oder anschließender Umsetzung derselben mit am Oxidationskatalysator (4) gebildetem NO₂ aufweist, umfassend ein Substrat, das mit einer Beschichtung versehen ist, welche einen Anteil von NO₂ im durchströmenden Abgasstrom (2) durch Reduktion des NO₂ verringert, wobei die Beschichtung zumindest zwei Elemente aus der Gruppe der Seltenerdmetalle aufweist, die in Form eines Salzes oder Oxides oder elementar und jeweils in einer Konzentration von mehr als 300,0 bis 50000,0 g/m³ in der Beschichtung vorliegen, wobei die Beschichtung Barium und/oder Mangan enthält, **dadurch gekennzeichnet, dass** die Beschichtung Palladium und/oder Rhodium aufweist und im Wesentlichen frei von Platin ist.

2. Sperrkatalysator (1) nach Anspruch 1, **dadurch gekennzeichnet, dass** die Beschichtung Elemente der Seltenerdmetalle ausgewählt aus der Gruppe bestehend aus Lanthan, Yttrium, Cer, Neodym und/oder Samarium aufweist.

3. Sperrkatalysator (1) nach Anspruch 1 oder 2, **dadurch gekennzeichnet, dass** die Beschichtung Vanadium aufweist.

4. Sperrkatalysator (1) nach einem der Ansprüche 1 bis 3, **dadurch gekennzeichnet, dass** die Beschichtung eine untere Beschichtungslage aufweist, auf welcher eine die Seltenerdmetalle enthaltende obere Beschichtungslage abgeschieden ist.

5. Sperrkatalysator (1) nach Anspruch 4, **dadurch gekennzeichnet, dass** die untere Beschichtungslage im Wesentlichen aus Aluminiumoxid besteht.

6. Sperrkatalysator (1) nach Anspruch 4 oder 5, **dadurch gekennzeichnet, dass** die obere Beschichtungslage Partikel aus kristallinem Siliciumdioxid oder einer glasartigen Siliciumdioxid-Phase umfasst, welche Partikel durchschnittlich kleiner als 100 nm sind.

7. Sperrkatalysator (1) nach einem der Ansprüche 1 bis 6, **dadurch gekennzeichnet, dass** das Substrat aus einem keramischen Material, insbesondere Cordierit, gebildet ist.

8. Sperrkatalysator (1) nach einem der Ansprüche 1 bis 7, **dadurch gekennzeichnet, dass** das Substrat mit parallelen Kanälen ausgebildet ist, die sich von einer Eintrittsseite (6) bis zu einer Austrittsseite (7) des Substrates erstrecken.

9. Sperrkatalysator (1) nach Anspruch 8, **dadurch gekennzeichnet, dass** das Substrat in einer Ebene normal zu den parallelen Kanälen weniger als 250, vorzugsweise etwa 100 bis 200, cpsi aufweist.

10. Abgastrakt (3) einer Verbrennungskraftmaschine, umfassend eine von einem Abgasstrom (2) durchströmte Abgasreinigungsvorrichtung (8), die einen Oxidationskatalysator (4) und optional einen Partikelfilter (5) aufweist, wobei stromabwärts ein Sperrkatalysator (1) zur Reduktion eines NO₂-Gehaltes im vom Abgasstrom (2) durchströmten Abgastrakt (3) angeordnet ist, **dadurch gekennzeichnet, dass** der Sperrkatalysator (1) nach einem der Ansprüche 1 bis 9 ausgebildet ist.

11. Abgastrakt (3) nach Anspruch 10, **dadurch gekennzeichnet, dass** der Sperrkatalysator (1) in radialer Richtung seitliche Bleche (9) aufweist, die gasundurchlässig sind und an welchen der Sperrkatalysator (1) in einem Gehäuse (10) des Abgastraktes (3) gehalten ist.

12. Abgastrakt (3) nach Anspruch 10 oder 11, **dadurch gekennzeichnet, dass** zwischen dem Oxidationskatalysator (4) oder dem Partikelfilter (5) und dem Sperrkatalysator (1) eine Düse zum Einspritzen von Kohlenwasserstoffen angeordnet ist.

## Claims

1. A slip catalyst (1) for reducing a NO₂ content in an exhaust train (3) of an internal combustion engine flowed through by an exhaust gas flow (2) in particular an exhaust train of a diesel engine (3), which has an oxidizing catalyst (4) for the formation of NO₂ and a particulate filter arranged downstream for binding carbon black particles and simultaneous and/or subsequent reaction of the same with NO₂ formed on the oxidizing catalyst (4), comprising a substrate that is provided with a coating, which coating reduces a proportion of NO₂ in the exhaust gas flow (2) flowing through, **characterized in that** the coating has at least two elements from the group of rare-earth metals, which are present in the coating in the form of a salt or an oxide or in an elementary form and in a concentration of more than 300,0 to 50000,0 g/m³, whereas the coating which contains barium and/or manganese is **characterized by** the presence of palladium and /or rhodium but basically not platinum.

2. The slip catalyst (1) according to claim 1, **characterized in that** the coating comprises of elements of the rare earth metals group like lanthanum, yttrium, cerium, neodymium and/or samarium.

3. The slip catalyst (1) according to claim 1 or 2, **characterized in that** the coating contains vanadium.

4. The slip catalyst (1) according to one of claims 1 through 3, **characterized in that** the coating has a lower coating layer on which an upper coating layer containing the rare earth metals is deposited.

5. The slip catalyst (1) according to claim 4, **characterized in that** the lower coating layer is composed essentially of aluminium oxide.

6. The slip catalyst (1) according to claim 4 or 5, **characterized in that** the upper coating layer contains particles of crystalline silicon dioxide or a glass-like silicon dioxide phase, which particles on average are smaller than 100 nm.

7. The slip catalyst (1) according to one of claims 1 through 6, **characterized in that** the substrate is formed from a ceramic material, in particular cordierite.

8. The slip catalyst (1) according to one of claims 1 through 7, **characterized in that** the substrate is embodied with parallel channels, which extend from an inlet side (6) to an outlet side (7) of the substrate.

9. The slip catalyst (1) according to claim 8, **characterized in that** in a plane perpendicular to the parallel channels the substrate has fewer than 250, preferably approximately 100 to 200, cpsi.

10. An exhaust train (3) of an internal combustion engine, comprising of an exhaust gas purification device (8) flowed through by an exhaust gas flow (2), which device has an oxidizing catalyst (4) and optionally a particulate filter (5), wherein a slip catalyst (1) for the reduction of a NO₂ content in the exhaust train (3) flowed through by the exhaust gas flow (2) is arranged downstream, **characterized in that** the slip catalyst (1) is embodied according to one of claims 1 through 9.

11. The exhaust train (3) according to claim 10, **characterized in that** in the radial direction, the slip catalyst (1) has lateral plates (9) that are impermeable to gas and on which the slip catalyst (1) is held in a housing (10) of the exhaust train (3).

12. The exhaust train according to claim 10 or 11, **characterized in that** a nozzle for the injection of hydrocarbons is arranged between the oxidizing catalyst (4) or the particulate filter (5) and the slip catalyst (1).

## Revendications

1. Catalyseur de blocage (1) pour la réduction d'une teneur en NO₂ dans une ligne d'échappement (3) traversée par un flux de gaz d'échappement (2) d'un moteur à combustion interne, en particulier d'une ligne d'échappement (3) d'un moteur Diesel qui comporte un pot catalytique d'oxydation (4) pour la formation de NO₂ et un filtre à particules (5) disposé en aval pour fixer les particules de suie et la transformation simultanée et/ou ultérieure de celles-ci avec le NO₂ formé sur le pot catalytique d'oxydation (4), comprenant un substrat qui est muni d'un revêtement, lequel réduit une partie du NO₂ dans le flux de gaz d'échappement (2) traversant par réduction du NO₂, le revêtement comportant au moins deux éléments appartenant au groupe des métaux des terres rares qui sont présents dans le revêtement sous la forme d'un sel ou d'un oxyde ou de façon élémentaire et respective dans une concentration de plus de 300,0 à 50000,0 g/m³, le revêtement contenant du baryum et/ou du manganèse, **caractérisé en ce que** le revêtement comporte du palladium et/ du rhodium et est pour l'essentiel exempt de platine.

2. Catalyseur de blocage (1) selon la revendication 1, **caractérisé en ce que** le revêtement comporte des éléments des métaux des terres rares choisis à partir du groupe composé de lanthane, d'yttrium, de cérium, de néodyme et/ou de samarium.

3. Catalyseur de blocage (1) selon la revendication 1 ou 2, **caractérisé en ce que** le revêtement comprend du vanadium.

4. Catalyseur de blocage (1) selon l'une quelconque des revendications 1 à 3, **caractérisé en ce que** le revêtement comporte une couche de revêtement inférieure sur laquelle est déposé une couche de revêtement supérieure contenant les métaux des terres rares.

5. Catalyseur de blocage (1) selon la revendication 4, **caractérisé en ce que** la couche de revêtement inférieure est pour l'essentiel composée d'oxyde d'aluminium.

6. Catalyseur de blocage (1) selon la revendication 4 ou 5, **caractérisé en ce que** la couche de revêtement supérieure comprend des particules de dioxyde de silicium cristallin ou d'une phase de dioxyde de silicium vitreux, lesquelles particules sont en moyenne inférieures à 100 nm.

7. Catalyseur de blocage (1) selon l'une quelconque des revendications 1 à 6, **caractérisé en ce que** le substrat est formé d'un matériau céramique, en particulier de cordiérite.

8. Catalyseur de blocage (1) selon l'une quelconque des revendications 1 à 7, **caractérisé en ce que** le substrat est constitué de canaux parallèles qui s'étendent d'un côté d'entrée (6) jusqu'à un côté de sortie (7) du substrat.

9. Catalyseur de blocage (1) selon la revendication 8, **caractérisé en ce que** le substrat comporte dans un plan verticalement aux canaux parallèles moins de 250, de préférence environ 100 à 200 cpsi.

10. Ligne d'échappement (3) d'un moteur à combustion interne comprenant un dispositif d'épuration des gaz d'échappement (8) traversé par un flux de gaz d'échappement (2) qui comporte un catalyseur d'oxydation (4) et en option un filtre à particules (5), un catalyseur de blocage (1) pour la réduction d'une teneur en NO₂ étant disposé dans la ligne d'échappement (3) traversée par un flux d'échappement (2), **caractérisée en ce que** le catalyseur de blocage (1) est constitué selon l'une quelconque des revendications 1 à 9.

11. Ligne d'échappement (3) selon la revendication 10, **caractérisée en ce que** le catalyseur de blocage (1) comporte dans le sens radial des tôles latérales (9) qui sont imperméables aux gaz et sur lesquelles est fixé le catalyseur de blocage (1) dans un carter (10) de la ligne d'échappement (3).

12. Ligne d'échappement (3) selon la revendication 10 ou 11, **caractérisée en ce qu'**une buse pour l'injection des hydrocarbures est disposée entre le catalyseur d'oxydation (4) ou le filtre à particules (5) et le catalyseur de blocage (1).
